# EUROPÄISCHE PATENTSCHRIFT

(11) **EP 1 363 783 B1**
(45) Veröffentlichungstag und Bekanntmachung des Hinweises auf die Patenterteilung: **29.09.2004**
(21) Anmeldenummer: 02719906.6
(22) Anmeldetag: 23.02.2002
(51) Int. Cl.: B41J 5/00

(54) **EINGABEVORRICHTUNG, INSBESONDERE FÜR EIN MOBILTELEFON**
INPUT DEVICE, ESPECIALLY FOR A MOBILE TELEPHONE
DISPOSITIF D'ENTREE, NOTAMMENT D'UN TELEPHONE MOBILE

(30) Priorität: 28.02.2001 DE 10109743; 10.05.2001 DE 10122810; 10.06.2001 DE 10128680; 17.06.2001 DE 10128798
(43) Veröffentlichungstag der Anmeldung: 26.11.2003
(73) Patentinhaber: Beckmann, Jürgen, Dr., 57462 Olpe (DE)
(72) Erfinder: Beckmann, Jürgen, Dr., 57462 Olpe (DE)
(86) Internationale Anmeldenummer: PCT/EP2002/001935
(87) Internationale Veröffentlichungsnummer: WO 2002/068201

(56) Entgegenhaltungen:
- EP-A- 0 805 389
- EP-A- 0 825 514
- WO-A-01/56256
- DE-A- 19 639 492
- DE-U- 29 921 515
- US-A- 5 602 566
- PATENT ABSTRACTS OF JAPAN vol. 1998, no. 12, 31. Oktober 1998 (1998-10-31) & JP 10 200618 A (TSUKIKI KAZUNORI), 31. Juli 1998 (1998-07-31)
- PATENT ABSTRACTS OF JAPAN vol. 1998, no. 01, 30. Januar 1998 (1998-01-30) & JP 09 247775 A (SONY CORP), 19. September 1997 (1997-09-19)

## Beschreibung

Die vorliegende Erfindung betrifft ein Verfahren nach dem Oberbegriff von Anspruch 1 sowie eine Eingabevorrichtung nach dem Oberbegriff von Anspruch 6. Die Erfindung wird nachfolgend am Beispiel der Tastatur eines Mobiltelefons ("Handy") erläutert, ohne jedoch auf diese spezielle Anwendung beschränkt zu sein. Grundsätzlich ist die Erfindung in allen Fällen vorteilhaft anwendbar, in denen über eine Tastatur mit einer begrenzten Anzahl an Tasten zahlreiche verschiedene Signale eingegeben werden sollen, so z.B. bei Fernbedienungen von elektronischen Geräten (TV, Video etc.).

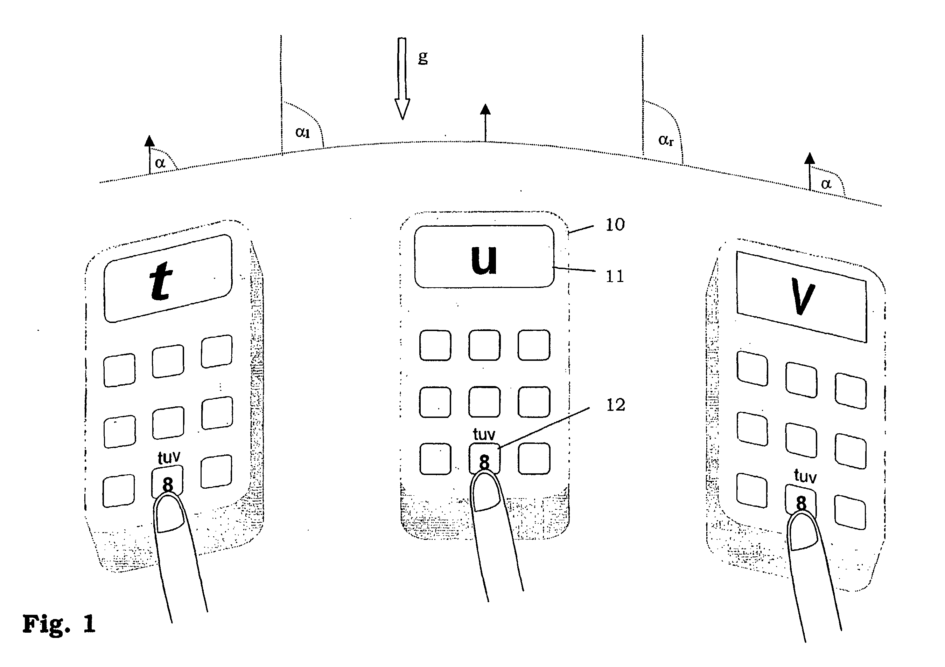

Figur 1 zeigt perspektivisch das beispielhafte Mobiltelefon 10 mit einer aus neun Tasten 12 bestehenden Tastatur und mit einer Anzeige 11. Bei der Eingabe von Text (z.B. für SMS oder ein Telefonbuch) tritt das Problem auf, dass über die wenigen Tasten 12 alle Buchstaben des Alphabets und gegebenenfalls weitere Zeichen einzugeben sind. Dies wird derzeit so gelöst, dass jeder Taste 12 mehrere Zeichen zugeordnet sind, die bei wiederholten, kurz hintereinander erfolgenden Betätigungen der Taste oder bei Festhalten der Taste zyklisch durchlaufen und auf der Anzeige 11 dargestellt werden. Zur Reduzierung der Tipparbeit ist ferner das "T9" System bekannt, bei dem für jede aus mehreren Zeichen bestehende Eingabe die theoretisch möglichen Zeichenkombinationen mit einem internen Wörterbuch abgeglichen werden, so dass nicht im Wörterbuch befindliche Kombinationen aussortiert werden können.

Des Weiteren offenbart die JP 10 200618 A eine Einrichtung zur Eingabe einer Information mit einer Hand. Die Einrichtung enthält einen Neigungssensor, eine Anzeige und eine Taste. Auf der Anzeige wird eine vom Neigungswinkel abhängige Information dargestellt. Wenn der Benutzer die Taste drückt, wird die aktuell angezeigte Information dauerhaft in die Anzeige übernommen.

Aus der JP 09 247775 A ist eine Fernbedienung bekannt, welche zwei Neigungssensoren zur Erfassung der aktuellen Neigungswinkel enthält. Wenn eine Taste auf der Vorderseite der Fernbedienung gedrückt wird, wird ein vom aktuellen Neigungswinkel abhängiger Code von der Fernbedienung gesendet.

Die EP 805 389 A2 offenbart ein Verfahren zum Scrollen. Wenn der Benutzer eine bestimmte Scroll-Taste drückt, wird die aktuelle räumliche Lage der Vorrichtung als Referenzposition gespeichert, und Abweichungen von dieser Lage werden anschließend als Befehl verstanden, die Anzeige in einer neigungsabhängigen Richtung mit einer neigungsabhängigen Rate zu scrollen. Um das Scrollen bei einer bestimmten Position anzuhalten, muss die Eingabevorrichtung wieder in die Referenzhaltung zurückgebracht werden.

Schließlich betrifft die EP 825 514 A2 die Bewegung eines Cursors auf einer größeren Anzeigefläche, welche zum Beispiel ein Menü darstellen kann. Eine Bewegung des Cursors findet statt, wenn ein Betätigungselement gedrückt wird und gleichzeitig eine Rotation der Vorrichtung um eine räumliche Achse erfolgt. Wird das Betätigungselement wieder losgelassen, wird die aktuell ausgewählte Position des Menüs als Eingabe übernommen.

Aufgabe der Erfindung war es, ein vereinfachtes Verfahren zur Eingabe von Informationen über mindestens ein Bedienelement (Taste etc.) anzugeben.

Diese Aufgabe wird durch ein Verfahren mit den Merkmalen des Anspruchs 1, und eine Eingabevorrichtung mit den Merkmalen des Anspruchs 6, gelöst. Vorteilhafte Weiterbildungen sind in den Unteransprüchen enthalten.

Das erfindungsgemäße Verfahren zur Eingabe von Informationen durch die Betätigung eines Betätigungselementes an einer Eingabevorrichtung ist dadurch gekennzeichnet, dass die einer Betätigung des Betätigungselementes zugeordnete Information von der räumlichen Orientierung der Eingabevorrichtung und/oder von der Änderung der räumlichen Orientierung der Eingabevorrichtung abhängt. Der Begriff "Eingabevorrichtung" umfasst hierbei und im Folgenden jede Vorrichtung, die durch eine irgendwie geartete, gezielte Betätigung bzw. Auslösung ein Signal erzeugt, insbesondere eine Tastatur. Bei einer Tastatur ist es mit dem Verfahren zum Beispiel möglich, ein und derselben Betätigungshandlung (Tastendruck) verschiedene Informationen zuzuordnen, je nachdem, wie die Tastatur während des Druckes gehalten oder bewegt wird. Hierdurch kann die Menge der mit einer einfachen Betätigung einer begrenzten Anzahl von Tasten eingebbaren Informationen erheblich vergrößert werden. Das Verfahren lässt sich daher mit besonderem Vorteil bei einer Handytastatur einsetzen, um hiermit alphanumerische Zeichen einzugeben.

Gemäß einer speziellen Ausgestaltung des Verfahrens wird die räumliche Orientierung der Eingabevorrichtung durch die Neigung der Eingabevorrichtung relativ zur Vertikalen und/oder durch die Ausrichtung der Eingabevorrichtung relativ zu einer ausgezeichneten Himmelsrichtung repräsentiert. Beide Orientierungsarten lassen sich lokal durch in der Eingabevorrichtung angebrachte Sensoren wie zum Beispiel einen Schwerkraftsensor beziehungsweise Neigungssensor oder einen Magnetfeldsensor detektieren.

Vorzugsweise werden die Werte der räumlichen Orientierung der Eingabevorrichtung und/oder der Änderung der räumlichen Orientierung in Intervalle unterteilt, wobei die einer Betätigung des Betätigungselementes zugeordnete Information innerhalb eines jeden solchen Intervalls konstant ist. Bei Überschreiten der Intervallgrenzen springt die Zuordnung der Information dagegen von einem Wert auf den anderen, wobei vorzugsweise eine Hysterese vorgesehen wird, um ein instabiles Verhalten an den Intervallgrenzen zu vermeiden.

Gemäß einer Weiterbildung des Verfahrens wird bei einer innerhalb von vorgegebenen Zeitabständen erfolgenden wiederholten Betätigung des Betätigungselementes die Zuordnung der Information durch zyklische Auswahl aus einer vorgegebenen Menge von Informationen vorgenommen. Wenn zum Beispiel die Taste eines Mobiltelefons ohne zu große Zwischenpausen mehrfach hintereinander betätigt wird, durchläuft das dem Tastendruck zugeordnete Zeichen zyklisch eine Reihe vorgegebener Zeichen.

Gemäß einer anderen Weiterbildung der Erfindung wird ein Teach-In Verfahren verwendet, um die Abhängigkeit zwischen der Information, die der Betätigung eines Betätigungselementes zugeordnet wird, und der räumlichen Orientierung der Eingabevorrichtung und/oder der Änderung der räumlichen Orientierung der Eingabevorrichtung festzulegen. Unter einem Teach-In wird dabei analog zur Robotik ein Vorgehen bezeichnet, bei welchem während einer Definitionsphase eine als Muster dienende Haltung und/oder Bewegung der Eingabevorrichtung ausgeführt wird, welcher eine durch den Benutzer explizit festgelegte Information zugeordnet wird. Nach Abschluss der Definitionsphase wird von der Eingabevorrichtung dann diese Information später immer wieder der Betätigung des Betätigungselementes zugeordnet, wenn das während der Definitionsphase vorgegebene und abgespeicherte Muster einer Haltung oder Bewegung (oder ein ähnliches Muster) wieder auftritt. Auf diese Weise kann der Benutzer zum Beispiel bei einem Mobiltelefon individuell festlegen, welche alphanumerischen Zeichen bei welcher Neigung des Mobiltelefons dem Druck einer bestimmten Taste zugeordnet werden sollen. Darüber hinaus kann der Benutzer jedoch auch komplexere Bewegungen wie zum Beispiel bestimmte Schwenkbewegungen des Mobiltelefons als Muster vorgeben, anhand derer bestimmte Informationen zugeordnet werden. So könnte beispielsweise bei Durchführung einer räumlichen Schreibbewegung mit dem gesamten Mobiltelefon in Form des Buchstabens "A" dieser entsprechende Buchstabe zugeordnet werden.

Gemäß einer anderen Weiterbildung der Erfindung kann die Betätigung des Betätigungselementes durch die Bewegung der Eingabevorrichtung erfolgen. Wie bereits erläutert wurde, ist unter einer Eingabevorrichtung nicht nur eine Tastatur im herkömmlichen Sinne zu verstehen, welche von Hand zu bedienende mechanische Betätigungselemente enthält. Vielmehr kann das Betätigungselement auch eine Schaltung oder ein Sensor sein, welche(r) durch eine bestimmte Bewegung der Eingabevorrichtung ausgelöst wird. Je nach Art dieser Bewegung kann dabei die dem Auslösevorgang zugeordnete Information unterschiedlich sein. In Fortführung des vorstehend genannten Beispiels könnte ein Mobiltelefon beispielsweise eine Betätigungsvorrichtung enthalten, welche durch eine Schwenkbewegung des Mobiltelefons in Form eines geschriebenen Buchstabens ausgelöst wird und dann gleichzeitig den Wert dieses Buchstabens als eingegebene Information zuordnet.

Bei dem Verfahren wird eine der Betätigung des Betätigungselementes zugeordnete Information vorzugsweise dem Benutzer angezeigt, so dass dieser eine Kontrolle über den Eingabevorgang erhält. Dabei kann die Anzeige der zugeordneten Information insbesondere auch nach einer Beendigung der Betätigung des Betätigungselementes fortgesetzt werden. Während der Benutzer zum Beispiel bei einem Mobiltelefon eine Taste gedrückt hält und die Neigung des Mobiltelefons verändert, können fortlaufend auf der Anzeige die momentan zugeordneten Buchstaben/Zahlen angezeigt werden, wobei der bei Loslassen der Taste vorherrschende Wert anschließend dauerhaft beibehalten wird.

Die Erfindung betrifft femer eine Eingabevorrichtung mit mindestens einem Betätigungselement und mit einer damit verbundenen Ausleseeinheit, welche bei Betätigung des Betätigungselementes ein Auslesesignal erzeugt. Die Eingabevorrichtung kann wie oben erläutert eine Tastatur sein, ist jedoch nicht hierauf beschränkt. Sie ist dadurch gekennzeichnet, dass sie mindestens einen Orientierungssensor enthält. Die von einem solchen Orientierungssensor erfassten Informationen bezüglich der Lage der Eingabevorrichtung können dann für eine intelligente Zuordnung von Informationen zur Betätigung des Betätigungselementes verwendet werden, wobei die Eingabevorrichtung insbesondere so eingerichtet sein kann, dass sie ein Verfahren der oben erläuterten Art ausführen kann.

Der Orientierungssensor kann insbesondere mit der Ausleseeinheit der Eingabevorrichtung gekoppelt sein, wobei die Ausleseeinheit so eingerichtet ist, dass das erzeugte Auslesesignal von dem die Orientierung der Eingabevorrichtung repräsentierenden Signal des Orientierungssensors abhängt.

Bei dem Orientierungssensor kann es sich um einen Neigungssensor und/oder einen Sensor für die Himmelsrichtung, insbesondere einen Magnetfeldsensor handeln.

Die Eingabevorrichtung kann ferner eine Anzeige (Monitor, Display) zur Darstellung eines dem Auslesesignal der Ausleseeinheit zugeordneten Zeichens enthalten.

Gemäß einer Weiterbildung der Eingabevorrichtung kann diese eine Alarmeinrichtung enthalten, welche mit dem Orientierungssensor gekoppelt und so eingerichtet ist, dass sie in einem Bereitschaftszustand einen Alarm auslöst, wenn der Orientierungssensor eine Änderung der Orientierung der Eingabevorrichtung detektiert. Eine derartige Alarmfunktion ist zum Beispiel in Verbindung mit einem Mobiltelefon vorteilhaft, wobei das Telefon nach Scharfstellen der Alarmeinrichtung auf eine Veränderung der Orientierung mit einem akustischen, optischen und/oder telefonischen Alarm reagieren kann, sofern die Scharfstellung nicht durch einen autorisierten Eingriff aufgehoben wird.

Gemäß einer anderen Weiterbildung der Erfindung kann die Eingabevorrichtung einen Schrittzähler und/oder eine Einrichtung zur Entfernungsmessung mittels Integration enthalten, wobei der Schrittzähler oder die Einrichtung mit dem Orientierungssensor gekoppelt ist. Wenn der Orientierungssensor zum Beispiel in einem Mobiltelefon integriert ist, kann auf diese Weise durch bloßes Hinzufügen von Software eine zusätzliche und nützliche Funktionalität erreicht werden. Weitere Nutzungen eines integrierten Orientierungssensors ergeben sich insbesondere durch Spiele. So könnte beispielsweise bei einem Mobiltelefon das von der Neigung des Mobiltelefons abhängige Rollen einer Kugel durch ein Labyrinth auf dem Display simuliert werden.

Im Folgenden wird die Erfindung mit Hilfe der Figuren beispielhaft erläutert. Es zeigt:
- Figur 1: wie der Betätigung einer einzigen Taste an einem Handy je nach dessen Neigung verschiedene Buchstaben zugeordnet werden;
- Figur 2: die Definition von Orientierungswinkeln relativ zur Schwerkraft;
- Figur 3: die Zuordnung von Buchstaben zu Winkelintervallen;
- Figur 4: die Zuordnung nach Figur 3 mit zusätzlicher Abhängigkeit von der Winkeländerung;
- Figur 5: ein Flussdiagramm für die Zuordnung von Information bei wiederholter Tastenbetätigung;
- Figur 6: die Definition von Orientierungswinkeln relativ zur Himmelsrichtung.

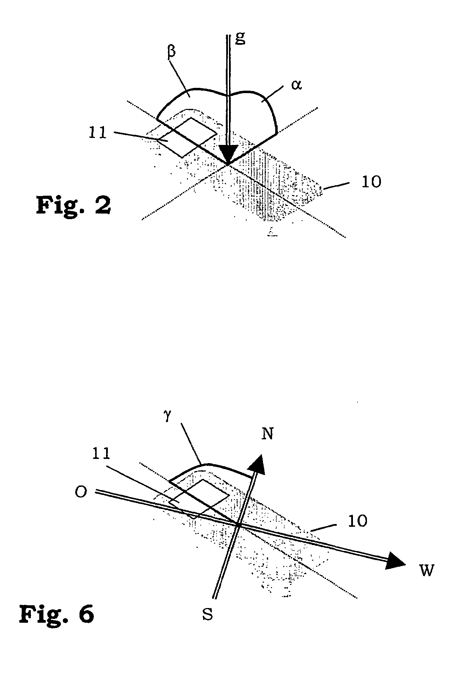

Das in den Figuren stellvertretend für beliebige Eingabevorrichtungen bzw. Tastaturen betrachtete Mobiltelefon 10 enthält einen Neigungssensor (nicht dargestellt), welcher die Beschleunigung relativ zum Schwerefeld der Erde (Vektor g) misst. Im statischen Fall entspricht diese Beschleunigung der Neigung des Mobiltelefons 10, welche sich durch die Winkel α und β zwischen dem Vektor g und der Querachse bzw. Längsachse des Mobiltelefons 10 angeben lässt (Figur 2). Neigungssensoren sind mittlerweile als kostengünstige mikro-mechanoelektronische Bauteile erhältlich und können insbesondere in Mikrochips integriert sein (vgl. Baustein ADXL der Firma Analog Devices, München).

Mit Hilfe des Neigungssensors kann das Mobiltelefon 10 wie in Figur 1 angedeutet erkennen, ob es nach links (α < αₗ) oder rechts (α > αᵣ) geneigt gehalten wird. Bei Neigung nach links kann eine Ausleseeinheit (nicht dargestellt) für die Tastatur dann eine Betätigung der Taste 12 (mit dem Aufdruck der Ziffer "8" und der Überschrift "tuv") als Eingabe des Buchstabens "t" interpretieren. Entsprechend wird eine Neigung nach rechts als Buchstabe "v" und ein in etwa horizontales Halten als Buchstabe "u" interpretiert. Als horizontale Lage des Mobiltelefons 10 wird dabei das vorgegebene und vorzugsweise vom Benutzer einstellbare Intervall [αₗ; αᵣ] definiert. Der Benutzer kann demnach drei verschiedene Buchstaben über einen Tastendruck und die dazu passenden Neigung des Mobiltelefons 10 eingeben.

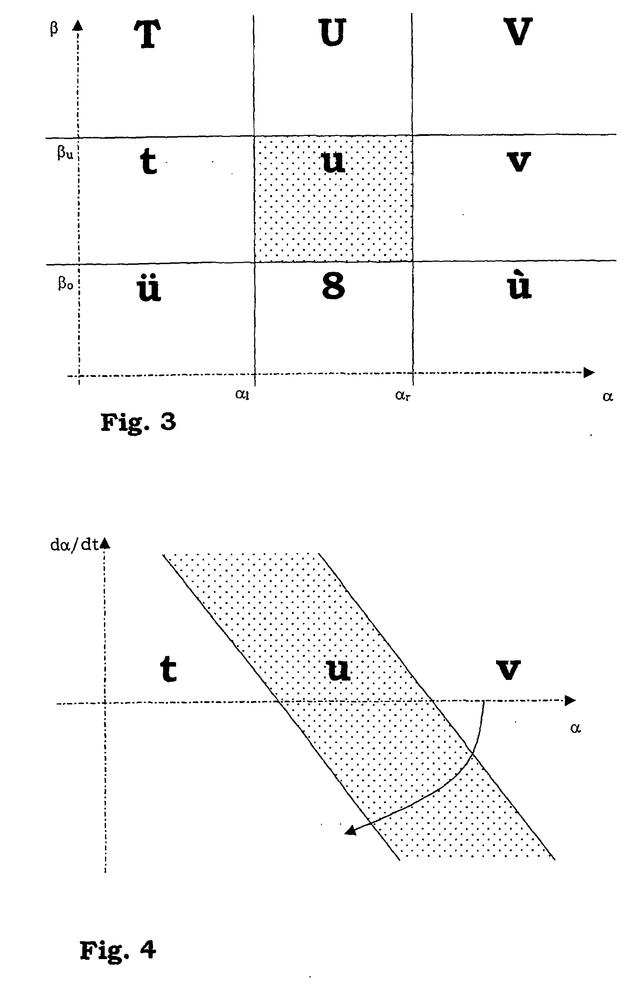

Weiterhin kann auch die Neigung um die Querachse entsprechend dem Winkel β ausgewertet werden. Das Diagramm von Figur 3 gibt dies im Koordinatensystem der Neigungswinkel α und β wieder, wobei jeweils die zweidimensionalen Winkelintervalle, denen ein bestimmtes Zeichen zugeordnet wird, durch Linien abgegrenzt sind. So kann eine Neigung der Anzeige 11 nach unten (β > βᵤ) je nach Winkel α die entsprechenden Großbuchstaben "T", "U", "V" zur Anzeige bringen. Eine Anhebung der Anzeige 11 nach oben (β < βₒ) kann für die Anzeige weiterer Zeichen verwendet werden, wobei die horizontale Haltung (αₗ ≤ α ≤ αᵣ) insbesondere als die Ziffer "8" interpretiert wird.

Eine entsprechende Zuordnung läßt sich auch für den Fall angeben, dass das Handy über Kopf gehalten und bedient wird (beispielsweise im Liegen des Benutzers).

Neben der statischen Information über den aktuellen Neigungswinkel könnte das Handy alternativ oder ergänzend auch die dynamische Änderung des Neigungswinkels auswerten. Dabei würde eine Winkeländerung "nach links", "nach rechts", "nach vorne" oder "nach hinten" eine entsprechende Interpretation der Tastatureingabe auslösen. In Figur 4 ist eine mögliche kombinierte Auswertung des Neigungswinkels α (Figur 2) und seiner Änderung dα/dt dargestellt. Für eine ruhige Haltung (dα/dt = 0) ergibt sich die Situation von Figur 3. Der eingezeichnete Verlaufspfeil zeigt eine Bewegung des Handys, bei der ausgehend von einer ruhigen, nach rechts (zum "v") geneigten Haltung nach links geschwenkt wird. Durch die Berücksichtigung der Neigungsänderung dα/dt kann dabei der Buchstabe "t" schon früher, bei einer etwa horizontalen Haltung des Handys, ausgewählt werden.

Eine ähnliche Berücksichtigung der Neigungsänderung ist natürlich auch für den Winkel β (Figur 2) möglich.

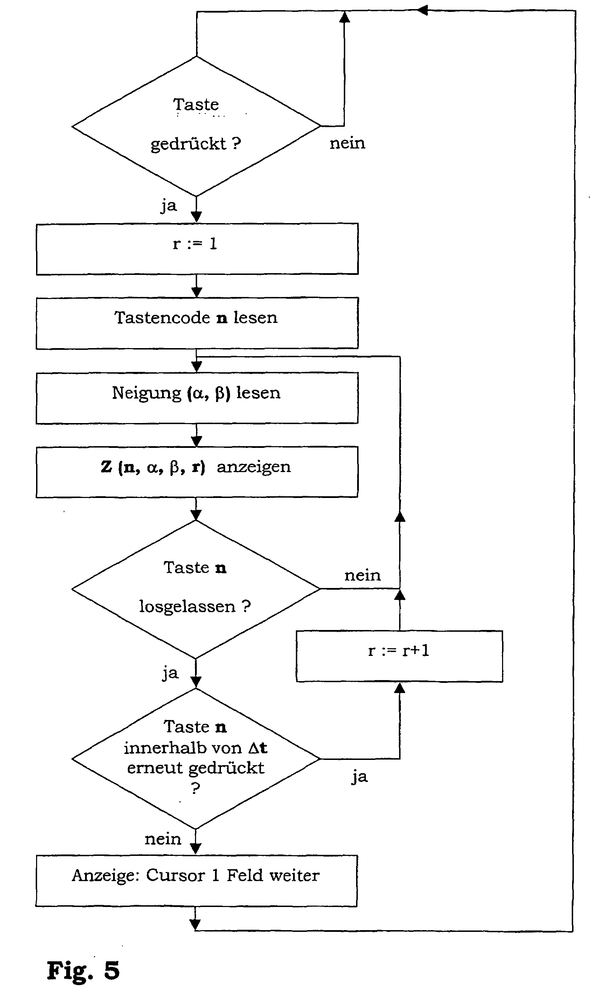

Figur 5 zeigt in einem Flussdiagramm eine mögliche Ablaufsteuerung für die Ausleseeinheit des Mobiltelefons 10, wobei zur Vereinfachung nur die Verwendung statischer Signale dargestellt ist. Zu Anfang wartet die Ausleseeinheit dabei in einer Endlosschleife auf einen ersten Druck irgendeiner Taste. Wenn dieser Tastendruck erfolgt, wird ein Zähler r (für die Wiederholungen des Tastedruckes) auf den Wert "1" gesetzt. Dann wird der Code n der gedrückten Taste gelesen. Dieser maschineninterne, vorzugsweise binär repräsentierte Code ist der gedrückten Taste eindeutig zugeordnet und unterscheidet sie von den übrigen Tasten.

Als nächstes werden die aktuellen Neigungswinkel α und β vom Neigungssensor gelesen. Dann erfolgt die Anzeige des Zeichens Z, welches dem Code n, den Winkeln α, β und dem r-ten Tastendruck zugeordnet ist: Z = Z (n, α, β, r). Für das in Figur 1 gezeigte erste Drücken der Taste mit dem Aufdruck der Ziffer "8" könnte Z in Abhängigkeit von α und β z.B. aus Figur 3 entnommen werden.

Im nächsten Schritt wird überprüft, ob die gedrückte Taste mit dem Code n inzwischen losgelassen wurde. Falls dies nicht der Fall ist, erfolgt ein erneutes Abfragen der aktuellen Neigungswinkel α und β und - gegebenenfalls - eine Aktualisierung der Anzeige. Der Benutzer kann also bei gedrückter Taste durch Bewegung des Mobiltelefons 10 verschiedene Zeichen auf die Anzeige bringen.

Wenn die Taste mit dem Code n losgelassen wurde und nicht innerhalb einer vorgegebenen bzw. vom Benutzer einstellbaren Zeitspanne Δt (typischerweise maximal einige Sekunden) erneut gedrückt wird, bleibt das zuletzt angezeigte Zeichen in der Anzeige stehen und der Cursor, der die aktuelle Schreibposition in der Anzeige markiert, geht ein Feld weiter. Anschließend wird auf eine weitere Betätigung irgendeiner Taste gewartet.

Falls jedoch die Taste mit dem Code n innerhalb der Zeitspanne Δt nach dem Loslassen erneut gedrückt wird, wird dies als Wunsch des Benutzers verstanden, durch die Reihe der verfügbaren Zeichen zu "wandern" oder zu "scrollen". Dazu wird zunächst der Zähler r um Eins erhöht, dann werden die aktuellen Neigungswinkel α und β eingelesen, und schließlich wird das Zeichen Z (n, α, β, r) angezeigt. Die Abhängigkeit des Zeichens Z von dem Wiederholungszähler r kann z.B. wie folgt aussehen:

| | r= | | | | | | |
|---|---|---|---|---|---|---|---|
| | **1** | **2** | **3** | **4** | **5** | **6** | **7** |
| Z (n, α < αₗ , β ≈ 90°, r) | t | u | v | 8 | ü | ü | û |
| Z (n, αₗ ≤ α ≤ αᵣ , β ≈ 90°, r) | u | v | 8 | ü | ü | ü | t |
| Z (n, αᵣ < α , β ≈ 90°, r) | v | 8 | ü | ù | ü | t | u |
| ........................ | | | | | | | |

Während bisher nur die Berücksichtigung der Neigungswinkel α, β relativ zum Schwerefeld der Erde beschrieben wurde, ist die Erfindung nicht hierauf begrenzt. Zusätzlich oder alternativ kann nämlich auch die Ausrichtung des Handys relativ zu den Himmelsrichtungen Norden, Süden, Westen und Osten berücksichtigt werden. Figur 6 zeigt dabei die Definition eines Ausrichtungswinkels y relativ zur Richtung Norden. Zur Bestimmung der Nordrichtung bietet sich insbesondere das Erdmagnetfeld an, welches z.B. über einen Hall-Sensor im Handy ermittelt werden kann. Selbstverständlich sind auch andere Bestimmungsverfahren denkbar, etwa über die Benutzung des Global Positioning System (GPS) oder - gerade bei Handys - über Richtfunkverfahren.

Auch bei dem Ausrichtungswinkel γ ist es natürlich möglich, seine Änderung dγ/dt bei der Auswertung zu berücksichtigen.

Die Einzelheiten der Auswertung des Ausrichtungswinkels γ und/oder seiner Änderung können analog zur oben beschriebenen Auswertung der Neigung gestaltet werden.

Gemäß einem weiteren Aspekt der Erfindung, dem selbstständige Bedeutung zukommt, kann der Orientierungssensor auch zur Detektion eines vorgegebenen besonderen Zustandes der Eingabevorrichtung bzw. des Handys verwendet werden. Insbesondere kann der Orientierungssensor unter Ankopplung an eine Alarmeinrichtung zum Diebstahlschutz des Handys eingesetzt werden. Die in den Bereitschaftszustand versetzte ("scharf gestellte") Alarmeinrichtung erhält dabei die Signale vom Orientierungssensor und löst einen Alarm aus, wenn sie eine Änderung der Orientierung detektiert. Der Alarm kann z.B. als akustischer Alarm oder bei einem Handy auch als Absenden eines telefonischen Alarmrufes ausgestaltet sein. Eine derartige Alarmeinrichtung erkennt somit, ob ein ruhend abgelegtes Handy bewegt wird, was insbesondere bei einem Diebstahl durch einen unbefugten Zugriff geschehen kann. Der daraufhin ausgelöste Alarm setzt vorzugsweise zeitverzögert ein, um dem berechtigten Benutzer Gelegenheit zu geben, die Bereitschaft der Alarmeinrichtung z.B. durch Eingabe eines Zifferncodes aufzuheben. Selbstverständlich kann auf diese Weise auch ein mit dem Handy verbundener Gegenstand, etwa eine Tasche gegen Diebstahl geschützt werden.

Eine weitere Anwendung eines Beschleunigungs- oder Neigungssensors in einer Eingabevorrichtung bzw. einem Handy, der selbstständige Bedeutung zukommt, besteht in der Realisierung eines Schrittzählers. Dabei werden typische Beschleunigungsmuster erkannt und gezählt, die auftreten, wenn ein am Körper getragenes Handy durch Schreiten des Trägers bewegt wird.

Schließlich könnte ein Beschleunigungs- oder Neigungssensors in einer Eingabevorrichtung bzw. einem Handy auch als Entfernungsmesser eingesetzt werden, indem über einen vorgegebenen Zeitraum hinweg Beschleunigungen gemessen und integriert werden.

Der Fachmann erkennt, dass die obigen Anwendungen nur beispielhaft sind und weitere Anwendungen eines Beschleunigungs- oder Neigungssensors in einer Eingabevorrichtung bzw. einem Handy denkbar sind.

## Patentansprüche

1. Verfahren zur Eingabe von Text mit einer numerischen Tastatur (10) mit mehreren Tasten (12), denen jeweils mehr als ein Buchstabe zugeordnet ist, wobei auf oder neben den Tasten (12) eine Darstellung der Zuordnung vorhanden ist,
und wobei
- die einer Betätigung einer jeden Taste (12) der Tastatur (10) individuell zugeordnete Information jeweils von der räumlichen Orientierung (α, β) der Tastatur (10) und/oder der Änderung der räumlichen Orientierung (α, β) der Tastatur (10) in einer auf die genannte Darstellung bezogenen Weise abhängt,
- während der Betätigung einer Taste (12) die aktuell zugeordnete Information sowie nach Beendigung der Betätigung die zuletzt zugeordnete Information an einer Cursorposition angezeigt wird.

2. Verfahren nach Anspruch 1,
**dadurch gekennzeichnet, dass** die räumliche Orientierung durch die Neigung (α, β) der Tastatur (10) relativ zur Vertikalen und/oder durch die Ausrichtung der Tastatur (10) relativ zu einer ausgezeichneten Himmelsrichtung repräsentiert wird.

3. Verfahren nach Anspruch 1 oder 2,
**dadurch gekennzeichnet, dass** die räumliche Orientierung (α, β) der Tastatur (10) und/oder die Änderung der räumlichen Orientierung in Intervalle unterteilt ist, in denen die der Betätigung der Taste (12) zugeordnete Information konstant ist.

4. Verfahren nach mindestens einem der Ansprüche 1 bis 3,
**dadurch gekennzeichnet, dass** bei in vorgegebenen Zeitabständen erfolgender wiederholter Betätigung der Taste (12) die Zuordnung der Information durch zyklische Auswahl aus einer vorgegebenen Menge von Informationen erfolgt.

5. Verfahren nach mindestens einem der Ansprüche 1 bis 4,
**dadurch gekennzeichnet, dass** die Abhängigkeit der einer Betätigung der Taste (12) zugeordneten Information von der räumlichen Orientierung (α, β) der Tastatur (10) und/oder der Änderung der räumlichen Orientierung (α, β) der Tastatur (10) in einem Teach-in Verfahren festgelegt wird.

6. Eingabevorrichtung (10) zur Eingabe von Text mit einer numerischen Tastatur (10), enthaltend
- eine Anzeigevorrichtung (11);
- mehrere Tasten (12), denen jeweils mehr als ein Buchstabe zugeordnet ist, wobei auf oder neben den Tasten (12) eine Darstellung der Zuordnung vorhanden ist;
- eine mit den Tasten (12) verbundene Ausleseeinheit, welche bei Betätigung einer der Tasten (12) ein zugehöriges Auslesesignal (n) erzeugt;
- mindestens einen Orientierungssensor;
**dadurch gekennzeichnet, dass** sie dazu eingerichtet ist,
- jedem Auslesesignal (n) individuell eine Information (Z(n,α,β,r)) zuzuordnen, welche jeweils in einer auf die genannte Darstellung bezogenen Weise von der räumlichen Orientierung (α, β) der Eingabevorrichtung (10) und/oder der Änderung der räumlichen Orientierung (α, β) der Eingabevorrichtung (10) abhängt,
- während der Betätigung einer Taste (12) die aktuell zugeordnete Information sowie nach Beendigung der Betätigung die zuletzt zugeordnete Information auf der Anzeigevorrichtung (11) an einer Cursorposition anzuzeigen.

7. Eingabevorrichtung (10) nach Anspruch 6,
**dadurch gekennzeichnet, dass** sie eine Alarmeinrichtung enthält, welche mit dem Orientierungssensor gekoppelt und so eingerichtet ist, dass sie im Bereitschaftszustand einen Alarm auslöst, wenn der Orientierungssensor eine Änderung der Orientierung der Eingabevorrichtung detektiert.

8. Eingabevorrichtung (10) nach mindestens einem der Ansprüche 6 oder 7
**dadurch gekennzeichnet, dass** sie einen Schrittzähler und/oder eine Einrichtung zur Entfernungsmessung durch Integration enthält, welche(r) mit dem Orientierungssensor gekoppelt ist.

## Claims

1. Method for the input of text by means of a numeric pad (10) with a plurality of keys (12) to which more than one letter is assigned each, wherein a representation of the assignment is provided on or next to the keys (12), and wherein
- the information that is individually assigned to the operation of each key (12) of the pad (10) depends in each case on the spatial orientation (α, β) of the pad (10) and/or on the change of the spatial orientation (α, β) of the pad (10) in a way that corresponds to said representation,
- the information that is currently assigned is displayed at a cursor position during the operation of a key (12), and the information that was last assigned is displayed at the cursor position after termination of said operation.

2. Method according to claim 1,
**characterised in that** the spatial orientation is represented by the inclination (α, β) of the pad (10) relatively to the vertical and/or by the direction of the pad (10) relatively to a predetermined direction on the compass.

3. Method according to claim 1 or 2, **characterised in that** the spatial orientation (α, β) of the pad (10) and/or the change of the spatial orientation is partitioned into intervals in which the information assigned to the operation of the key (12) is constant.

4. Method according to at least one of the claims 1 to 3, **characterised in that** the assignment of information is done by cyclical selection from a given set of information if the key (12) is operated repeatedly within predetermined time intervals.

5. Method according to at least one of the claims 1 to 4, **characterised in that** the dependence of the information assigned to the operation of the key (12) on the spatial orientation (α, β) of the pad (10) and/or on the change of the spatial orientation (α, β) of the pad (10) is defined by a teach-in procedure.

6. Input device (10) for the input of text by means of a numeric pad (10), comprising
- a display device (11);
- a plurality of keys (12) to which more than one letter is assigned each, wherein a representation of the assignment is provided on or next to the keys (12);
- a readout unit coupled to said keys (12), the readout unit producing a readout signal (n) upon operation of one of the keys (12),
- at least one orientation sensor;
**characterized in that** it is adapted to
- to assign a piece of information (Z(n,α,β,r)) individually to each readout signal (n), wherein said piece of information depends in each case on the spatial orientation (α, β) of the pad (10) and/or on the change of the spatial orientation (α, β) of the pad (10) in a way that corresponds to said representation;
- to display the piece of information that is currently assigned at a cursor position on the display device (11) during the operation of a key (12), and to display the piece of information that was last assigned at the cursor position on the display device (11) after termination of said operation.

7. Input device (10) according to claim 6, **characterised in that** it comprises an alarm system that is coupled to the orientation sensor and arranged such that it causes an alarm in a standby state if the orientation sensor detects a change of the orientation of the input device.

8. Input device (10) according to at least one of the claims 6 or 7,
**characterised in that** it comprises a step counter and/or means for ranging by integration which are coupled to the orientation sensor.

## Revendications

1. Procédé d'entrée de texte à l'aide d'un clavier numérique (10) comportant plusieurs touches (12) auxquelles est associée à chaque fois plus d'une lettre, une représentation de l'association étant présente sur ou à côté des touches (12),
et dans lequel
- l'information individuellement associée à un actionnement de chaque touche (12) du clavier (10) dépend de l'orientation spatiale (α, β) du clavier (10) et/ou de la modification de l'orientation spatiale (α, β) du clavier (10) d'une manière en rapport avec la représentation mentionnée,
- on affiche à une position du curseur, pendant l'actionnement d'une touche (12), l'information actuellement associée ainsi que, après achèvement de l'actionnement, l'information associée en dernier lieu.

2. Procédé selon la revendication 1,
**caractérisé par le fait que** l'orientation spatiale est représentée par l'inclinaison (α, β) du clavier (10) par rapport à la verticale et/ou par l'orientation du clavier (10) par rapport à une direction ou un point cardinal marqué(e).

3. Procédé selon la revendication 1 ou 2,
**caractérisé par le fait que** l'orientation spatiale (α, β) du clavier (10) et/ou la modification de l'orientation spatiale est divisée en intervalles dans lesquels l'information associée à l'actionnement de la touche (12) est constante.

4. Procédé selon au moins l'une des revendications 1 à 3,
**caractérisé par le fait qu'**en cas d'actionnement répété de la touche (12) à des intervalles de temps définis, on associe l'information par sélection cyclique parmi une quantité définie d'informations.

5. Procédé selon au moins l'une des revendications 1 à 4,
**caractérisé par le fait que** la dépendance de l'information associée à un actionnement de la touche (12) par rapport à l'orientation, spatiale (α, β) du clavier (10) et/ou de la modification de l'orientation spatiale (α, β) du clavier (10) est définie lors d'un processus d'apprentissage.

6. Dispositif d'entrée (10) pour l'entrée de texte à l'aide d'un clavier numérique (10), contenant
- un dispositif d'affichage (11) ;
- plusieurs touches (12) auxquelles est associée à chaque fois plus d'une lettre, une représentation de l'association étant présente sur ou à côté des touches (12) ;
- une unité de lecture reliée aux touches (12), qui génère un signal de lecture (n) correspondant lorsqu'une des touches (12) est actionnée ;
- au moins un capteur d'orientation ;
**caractérisé par le fait qu'**il est conçu pour
- associer individuellement à chaque signal de lecture (n) une information (Z(n, α, β, r)) qui dépend chaque fois de l'orientation spatiale (α, β) du dispositif d'entrée (10) et/ou de la modification de l'orientation spatiale (α, β) du dispositif d'entrée (10) d'une manière en rapport avec la représentation mentionnée,
- afficher sur le dispositif d'affichage (11) à une position du curseur, pendant l'actionnement d'une touche (12), l'information actuellement associée ainsi que, après achèvement de l'actionnement, l'information associée en dernier lieu.

7. Dispositif d'entrée (10) selon la revendication 6, **caractérisé par le fait qu'**il contient un dispositif d'alarme qui est couplé avec le capteur d'orientation et conçu pour déclencher, au repos, une alarme lorsque le capteur d'orientation détecte une modification de l'orientation du dispositif d'entrée.

8. Dispositif d'entrée (10) selon au moins l'une des revendications 6 ou 7, **caractérisé par le fait qu'**il contient un podomètre et/ou un dispositif de mesure de distance par intégration qui est couplé avec le capteur d'orientation.
